# EUROPÄISCHE PATENTANMELDUNG

(11) **EP 2 610 539 A2**
(43) Veröffentlichungstag der Anmeldung: **03.07.2013**
(21) Anmeldenummer: 12007756.5
(22) Anmeldetag: 16.11.2012
(51) Int. Cl.: F17D 5/02, F17D 5/06

(54) **Verfahren und Vorrichtung zur Lokalisation von Datenloggern an Versorgungsleitungen mit einem Auslesegerät**

(30) Priorität: 28.12.2011 DE 102011122547
(71) Anmelder: Seba-Dynatronic Mess- und Ortungstechnik GmbH, 96148 Baunach (DE)
(72) Erfinder: Hofmann, Michael, 96149 Breitengussbach (DE); Schuberth, Harald, Dr., 96149 Breitengussbach (DE)
(74) Vertreter: Riebling, Peter

(57) **Zusammenfassung**

Verfahren zum Aussetzen und Wiederauffinden von Datenloggern (5,6,7), die in einem ersten Schritt auf voneinander beabstandeten Positionen eines Versorgungsnetzes mit einer Vielzahl von verzweigten Rohrleitungen (1), z.B. für Trinkwasser, ausgesetzt werden, die in einem zweiten Schritt mindestens die Fliessgeräusche des strömenden Mediums an der ausgesetzten Position aufzeichnen und die in einem dritten Schritt von einem vorbei fahrenden Fahrzeug (9) mit einem dort angeordneten Auslesegerät ausgelesen werden, wobei dem Auslesegerät ein GPS-Modul (11) zugeordnet ist und beim Aussetzen des Datenloggers an der ihm zugeordneten Position auf der Rohrleitung die aktuelle GPS-Position des Datenloggers an dieser Position im Auslesegerät abgespeichert wird.

## Beschreibung

Datenlogger werden für Vorortung von Leckagen in Versorgungsleitungen, z.B. für Trinkwasser, verwendet. Die Datenlogger zeichnen Daten auf, die einen Rückschluss auf eine undichte Stelle im Rohr ermöglichen.

Dazu können Geräuschdaten aufgezeichnet und analysiert werden. Beim Überschreiten eines eingestellten Wertes kann eine Warnung oder ein Alarm ausgegeben werden. Um ein Leckgeräusch zu messen, müssen die Datenlogger auf der Versorgungsleitung befestigt werden. Dazu wird der Datenlogger in der Regel an einem gut zugänglichen Punkt, z.B. ein Hydrant oder Absperrschieber, mit Hilfe eines Magneten oder anderer Befestigungshilfsmittel, an der Versorgungsleitung angebracht.

Da sich die Versorgungsnetze über ein weites Gebiet erstrecken, müssen viele Datenlogger in das Rohrnetz eingebracht werden und können dann regelmäßig ausgelesen werden.

Mit einer auf den gleichen Anmelder zurückgehenden Patentanmeldung ist die automatische Auslesung der Datenlogger während der Vorbeifahrt mit einem Fahrzeug bekannt. Dazu ist das Auslesegerät im Fahrzeug angeordnet und empfängt den von dem jeweiligen Datenlogger ausgesendeten Funkstrahl, in dem z.B. die ID-Nummer, die Datenlogger-Nr. und der bis zur Auslesung aufgezeichnete und gespeicherte Geräuschspeicher enthalten sind.

Nachteilig war allerdings, dass die genaue Position der Vielzahl der ausgesetzten Datenlogger nicht bekannt war. Um ein bestimmtes Versorgungsnetz zu überwachen wurden eine Vielzahl von Datenloggern an den zu überwachenden Stellen des Versorgungsnetzes an weit auseinander liegenden Positionen ausgesetzt. Die Absetzstelle des Datenloggers konnte jedoch bisher nur auf einer geografischen Karte eingezeichnet werden, was mit einem hohen Aufwand verbunden war.

Wurden die Absetzstellen nicht korrekt auf der Karte eingezeichnet war ein Wiederauffinden der Absetzstelle und des dort ausgesetzten Datenloggers schwierig oder gar unmöglich.

Wenn während der Mess- und Aufzeichnungszeit ein bestimmter Datenlogger, z.B. wegen eines Batteriedefektes, ausgefallen war und seine Funkaussendung eingestellt hatte, konnte während der Vorbeifahrt keine Funkaussendung empfangen werden und man nahm irrtümlich an, dass dort kein Datenlogger ausgesetzt worden ist. Es gingen deshalb viele Datenlogger verloren, weil deren genauer Absetzort auf einer Straßenkarte nicht genau genug lokalisiert werden konnte.

Der Erfindung liegt deshalb die Aufgabe zugrunde, ein Verfahren zum Aussetzen und Wiederauffinden von Datenloggern, die auf voneinander beabstandeten Stellen eines Versorgungsnetzes ausgesetzt werden, zu vereinfachen und betriebssicherer zu gestalten.

Zur Lösung der gestellten Aufgabe ist die Erfindung durch die technische Lehre des unabhängigen Verfahrensanspruches gekennzeichnet. Die hierfür verwendete Vorrichtung ist Gegenstand des unabhängigen Vorrichtungsanspruches.

Vorteil des erfindungsgemäßen Verfahrens ist, dass für das Auslesegerät nur ein GPS-Empfänger ohne Kompass und Kartenmaterial benötigt wird. Auf fehleranfällige, umständlich zu handhabende Straßenkarten kann nunmehr verzichtet werden.

Mit dem erfindungsgemäßen Auslesegerät "Commander 3" ist es möglich die GPS-Position der Datenlogger beim Aussetzen auf der Versorgungsleitung zu speichern. Um das Auffinden der Datenlogger zu vereinfachen, werden die Geo-Koordinaten mittels GPS (Global Positioning System) zu den Datenloggerdaten im Auslesegerät gespeichert.

Dadurch wird der Import in eine Analysesoftware, mit Rohrnetzplänen oder Karten, vereinfacht. Um das Auffinden eines ausgesetzten Datenloggers zu erleichtern, kann das Auslesegerät als Navigationshilfe verwendet werden. Da dieses weder über einen integrierten Kompass verfügt und auch kein Kartenmaterial zur Verfügung hat, musste eine alternative Lösung gefunden werden.

Bewegt sich der Benutzer in eine Richtung, kann aus zwei GPS-Positionen die Richtung der Bewegung bestimmt werden. Um den Datenlogger zu finden, möchte man wissen, in welche Richtung man laufen oder fahren muss.

Durch die im Auslesegerät gespeicherte GPS-Position des Datenloggers und aufgrund der aktuellen GPS-Position des Benutzers ist bekannt, in welcher Himmelsrichtung sich der Datenlogger befindet. Leider weiß man häufig nicht genau wo Norden ist, um sich direkt in Richtung des Datenloggers zu bewegen.

Da man durch die Bewegung des Auslesegerätes durch Ablesung der Bildschirmanzeige bestimmen kann, in welche Himmelsrichtung man sich bewegt, kann man so auch bestimmen, in welcher Richtung sich der Datenlogger befindet. Wird in der Software des Auslesegerätes die Bewegungsrichtung so dargestellt, dass die Himmelsrichtung in die man sich bewegt, nach oben zeigt, und ein Pfeil auf die Himmelsrichtung zeigt, in der sich der Datenlogger befindet, zeigt der Pfeil automatisch in die Richtung, in die man in einem Satellitenbild die Positionen (Quelle: Google-Maps) der ausgesetzten Datenlogger erkennt.

Damit das Auffinden der Datenlogger ermöglicht wird, muss ein GPS-Empfänger-Modul an das Auslesegerät (Commander) angeschlossen werden. Dies kann entweder als zusätzliches externes Modul angesteckt oder im Innern des Gehäuses platziert werden.

Wird zu jedem Datenlogger, beim Aussetzen auf die Messstelle an der Rohrleitung, die GPS-Position gespeichert, kennt das Auslesegerät alle geographischen Positionen und kann diese bei einer Suchfahrt auch wieder auffinden. Zusätzlich können diese Positionen mit einer Software auf einem PC in einer geografischen Karte dargestellt werden. Der Benutzer kann auf diese Weise sehr einfach erkennen, an welcher Stelle sich die jeweiligen Datenlogger befinden. Dadurch wird die Interpretation der Messdaten deutlich vereinfacht.

Der grundsätzliche Ablauf zum Speichern der GPS-Positionen sieht wie folgt aus:
1. Datenlogger an der Messstelle platzieren
2. GPS-Position zu dem Datenlogger speichern
3. Datenlogger zeichnet Messdaten auf
4. Navigieren zu der Messstelle mit dem Datenlogger
5. Auslesen der Messdaten

### Zusätzliche Möglichkeiten:

Das Auslesen der Messdaten kann auch durch Patrouillieren der Datenlogger im Rahmen einer Suchfahrt geschehen, wenn diese in festgelegten Abständen die Datensätze per Funk aussenden.

Wird das Funksignal eines Datenloggers nicht empfangen, weil dieser z.B. ausgeschaltet wurde, kann über das Auslesegerät eine Warnung ausgegeben werden, wenn sich der Benutzer in der Funkreichweite des Datenloggers befindet und diesen nicht empfängt.

Die gespeicherten Positionen können über eine spezielle Software extrahiert werden und in ein Format konvertiert werden, welches von einem Navigationsgerät für Kraftfahrzeuge gelesen werden kann.

Dadurch kann mit Hilfe des Kartenmaterials aus dem Navigationsgerät eine optimale Route zum Patrouillieren der Datenlogger berechnet werden. Mit Hilfe des GPS-Moduls kann man auch die Position von weiteren Geräten speichern, die z.B. für den Aufbau eines Netzwerkes benötigt werden. Auf diese Weise kann man auf einer Karte die Struktur des Netzwerks visualisieren.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert die Messfahrt eines Auslesegerätes entlang einer Rohrleitung, bei der eine Mehrzahl von Datenloggern befestigt wird,
- Figur 2:: die Bildschirmanzeige des Auslesegerätes beim Wiederauffinden eines Datenloggers,
- Figur 3:: die Bildschirmanzeige des Auslesegerätes mit der Angabe der geographischen Positionen einer Vielzahl von ausgesetzten Datenloggern,
- Figur 4:: schematisiert eine gleiche Darstellung wie Figur 1 bei der Auslesefahrt des Auslesegerätes entlang der Rohrleitung,
- Figur 5:: Darstellung des Ortes einer Vielzahl von Datenloggern auf einer geographischen Karte.

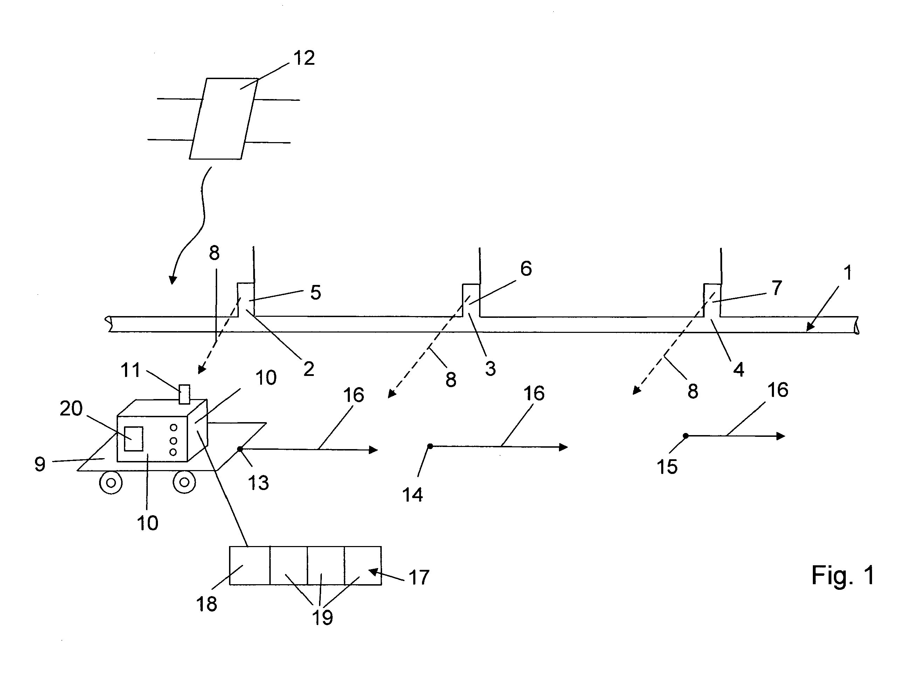

Die Figur 1 zeigt eine Messfahrt eines Auslesegerätes 10, welches in einem Fahrzeug 9 angeordnet ist, wobei an einer Rohrleitung 1 eine Vielzahl von Datenloggern 5, 6, 7 zur Überprüfung des Strömungs- und Leckverhaltens befestigt werden sollen.

Im gezeigten Ausführungsbeispiel werden die Datenlogger 5, 6, 7 an Absperrschiebern 2, 3, 4 der Rohrleitung 1 befestigt.

Hierauf ist die Erfindung jedoch nicht beschränkt. Die Datenlogger können an beliebigen Stellen der Rohrleitung 1 befestigt werden. Sie enthalten insbesondere eine Aufzeichnungs-Elektronik digitaler oder analoger Aufzeichnung von Geräuschmesswerten, die von einem eingebauten Mikrofon beim Abhören der Rohrleitung erzeugt und im Datenlogger gespeichert werden.

Im Datenlogger sind noch eine Reihe anderer Messfunktionen angeordnet, die nicht Gegenstand der vorliegenden Erfindung sind. Insbesondere wird mit jedem Datenlogger auch eine ID-Nummer 21 und ggf. eine Logger-Nummer 22 verbunden und in einem den Logger charakterisierenden Datenspeicher 17 abgespeichert.

Wichtig bei der Erfindung ist nun, dass während des Aussetzens eines Datenloggers 5 vom Fahrzeug 9 aus gleichzeitig die GPS-Position des auf dem Absperrschieber 2 befestigten Datenloggers 5 von einem GPS-Satelliten 12 erfasst und im Auslesegerät 10 abgespeichert wird. Auf diese Weise wird im Auslesegerät jedem ausgesetzten Datenlogger 5, 6, 7 eine eigene GPS-Koordinate 18 zugeordnet, die im Auslesegerät 10 abgespeichert wird. Das Fahrzeug 9 fährt beispielsweise von seiner ersten Position 13 über eine Fahrtstrecke 16 zu einer zweiten Position 14, wo wiederum der Datenlogger 6 ausgesetzt wird und an dieser Position wiederum die für diesen Absperrschieber 3 und den dort befestigten Datenlogger 6 geltende GPS-Koordinate und GPS-Position 23 im Auslesegerät 10 als Datenblock in einem Datenspeicher 17 abgelegt wird.

Der gleiche Vorgang wiederholt sich an der Position 15, so dass jedem Datenlogger 5 - 7 eine individuelle GPS-Koordinate 18 zugeordnet ist und alle Datensätze im Datenspeicher 17 des Auslesegerätes 10 angeordnet werden.

Es soll noch erwähnt werden, dass die Datenlogger 5 - 7 über eine Funkübertragungsstrecke 8 bei der Vorbeifahrt des Fahrzeuges 9 ausgelesen werden können.

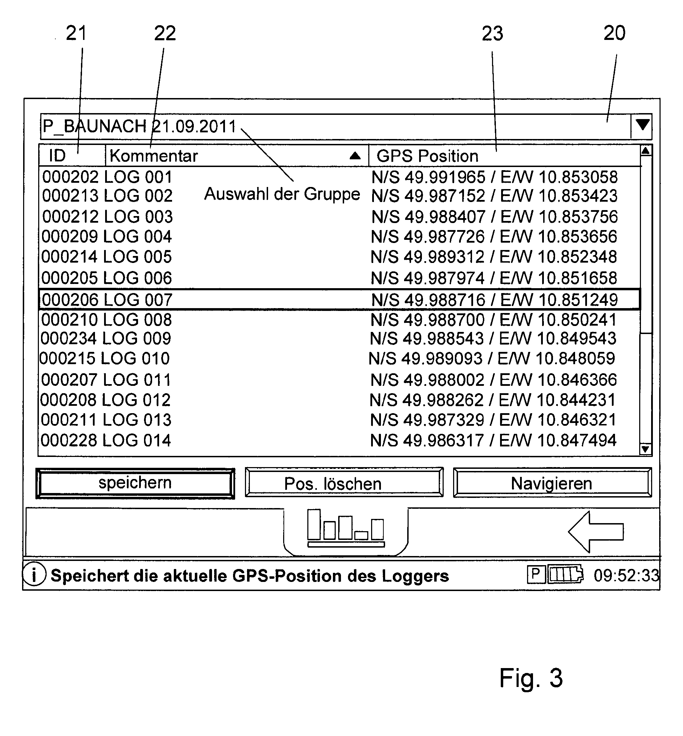

Die Figur 3 zeigt als Beispiel eine Bildschirmanzeige 20 des Auslesegerätes 10, bei dem jedem Datenlogger eine Logger-Nummer 22 und eine ID-Nummer 21 zugeordnet ist, wobei jeder Logger-Nummer 22 eine eindeutige GPS-Koordinate zugeordnet ist.

Statt der Zuordnung einer logischen Zahl als Logger-Nummer 22 kann auch ein Namen zugeordnet werden, wie z.B. dass der Logger mit der Nummer 22 den Straßennamen "Schillerstrasse 5" erhält.

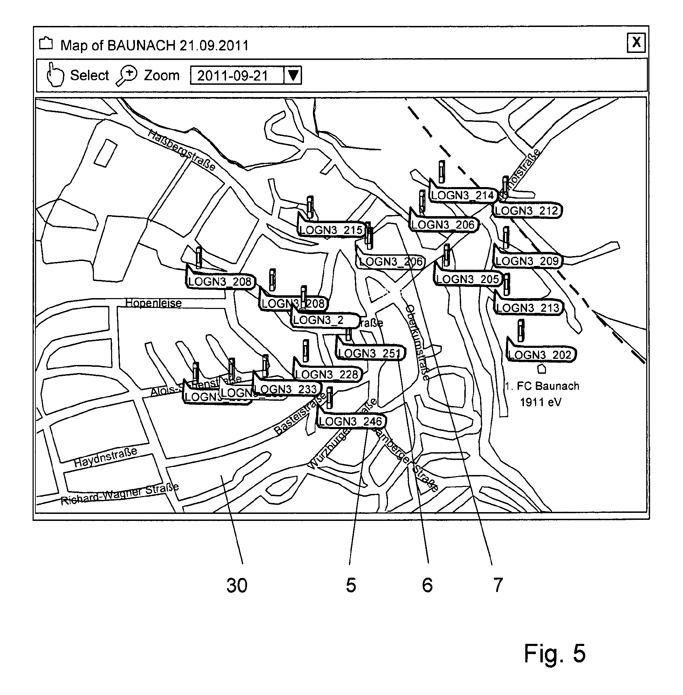

Die Figur 5 zeigt, dass die Art und Verteilung der Logger-Nummer in einer geographischen Karte eingezeichnet werden kann, wobei die Logger mit einem auffälligen Messergebnis (z. B. aufgrund eines dort festgestellten Lecks in der Rohrleitung) eine andere Farbgebung erhalten als vergleichsweise die umgebenden Logger, die unauffällige Messdaten abgespeichert haben.

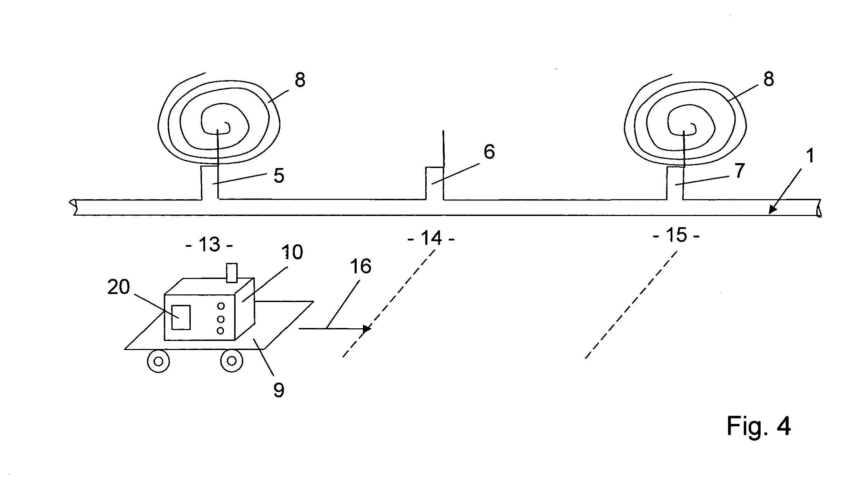

Die Figur 4 zeigt eine so genannte Auslesefahrt des auf einem Fahrzeug 9 angeordneten Auslesegerätes 10, wo erkennbar ist, dass über die eindeutige Zuordnung jeden Loggers zu seiner GPS-Position 23 gemäss der Bildschirmanzeige 20 in Figur 3 und ferner dadurch, dass jeder Logger auch in einer geographischen Karte gemäss Figur 5 eingezeichnet ist, die Wiederauffindung der ausgesetzten Logger gemäss Figur 4 besonders einfach ist.

Das Fahrzeug muss nur entlang der Fahrtstrecke 16 an der Rohrleitung 1 entsprechend einem vorher eingegebenen Fahrplan entlang fahren. Der Fahrplan kann über die geographische Karte nach Figur 5 erstellt werden.

In Figur 4 ist dargestellt, dass als Fehlerfall z. B. ein Datenlogger 6 ausfallen kann und dann keine Funkverbindung mehr und kein Auslesen mit dem Datenlogger 6 möglich ist.

Dank der Abspeicherung der GPS-Position 23 dieses Datenloggers 6 wird jedoch das Auslesgerät 10 nicht an dieser Stelle vorbei fahren, denn durch die vorherige Abspeicherung jeder GPS-Position 23 von jedem Datenlogger 5, 6, 7 ist dem Auslesegerät 10 bekannt, dass sich an der Position 14 ein Datenlogger 6 befinden muss, obwohl dieser stumm bleibt.

Auf diese Weise kann während der Vorbeifahrt des Auslesegerätes festgestellt werden, ob an dieser Stelle ein defekter Datenlogger 6 angeordnet ist, der aus irgendwelchen Gründen nicht mehr sendet.

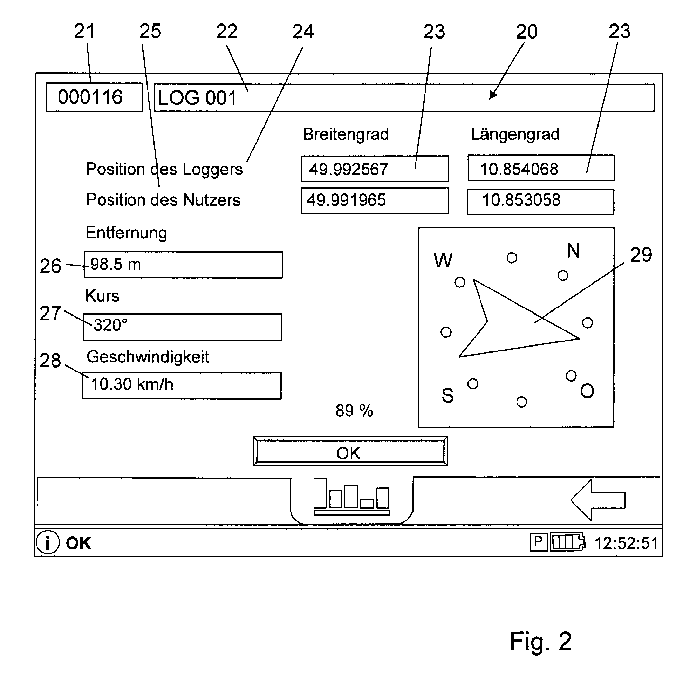

Die Figur 2 zeigt eine derartige Suchfahrt des Auslesegerätes 10 zu einem beliebigen Datenlogger 5, 6, 7, wobei der Begriff "Suchfahrt" auch beinhaltet, dass das Auslesegerät 10 von Hand getragen wird und der Träger des Auslesegerätes nun genau an den Ort des Datenloggers 5, 6, 7 gelotst wird.

Bei der Suchfahrt ist das Auslesegerät 10 im Fahrzeug 9 angeordnet, wobei an einer Rohrleitung 1 eine Vielzahl von Datenloggern 5, 6, 7 zur Überprüfung des Strömungs- und Leckverhaltens ausgelesen werden sollen.

Hierzu wird in dem oberen Balken der Bildschirmanzeige 20 des Auslesegerätes 10 die ID-Nummer 21 des betreffenden, aufzufindenden Loggers mit der Logger-Nummer 22 angezeigt, und im darunter liegenden Feld wird die aktuelle geographische Position des Loggers mit Breitengrad und Längengrad als GPS-Position (Soll-Position) angezeigt.

Im horizontalen Feld darunter wird die aktuelle Position des Nutzers 25 ebenfalls als GPS-Position 23 dargestellt, so dass der Nutzer von seiner Position 25 aus zur Position des Loggers 24 navigieren kann.

Im linken Teil der Bildschirmdarstellung 20 wird im oberen Feld die Zielentfernung 26 der Position des Nutzers 25 zur Position des Loggers 24 dargestellt und im Feld darunter in Winkelgraden der Kurs 27.

Ferner kann im Feld darunter auch noch die Geschwindigkeit 28 der Bewegung des Nutzers zum Logger angezeigt werden.

Im rechten Feld wird ein Richtungspfeil 29 als Kompass-Pfeil dargestellt, der die Richtung anzeigt, in der sich der Datenlogger befindet.

Durch Auslesung dieser Bildschirmanzeige 20 durch den Nutzer wird also eine eindeutige Navigationshilfe für den Nutzer zum Wiederauffinden des möglicherweise verborgen angebrachten Datenloggers 5 - 7 erreicht.

Zusätzlich kann sich der Benutzer auch noch die in Figur 5 dargestellte Umgebungskarte 30 zunutze machen, auf der die einzelnen Logger mit ihren ID-Nummern 21 eingezeichnet sind.

Logger mit kritischen Messwerten sind andersfarbig dargestellt.

Selbst, wenn also ein Logger aufgrund eines Defektes nicht senden sollte, so wird er gemäß der Darstellung in Figur 4 leicht aufzufinden sein.

In der vorstehenden Beschreibung ist angegeben, dass die GPS-Position nur in dem Auslesegerät gespeichert wird. In einer weiteren Ausführung der Erfindung ist jedoch vorgesehen, dass die GPS-Position im Datenlogger beim Aussetzen des Datenloggers auf die Rohrleitung gespeichert wird. Das mit dem GPS-Modul ausgerüstete Auslesegerät erfasst die aktuelle GPS-Position des Standortes des Fahrzeuges 9 beim Datenlogger und sendet die aktuelle GP-Position über eine Funkschnittstelle an den Datenlogger, der damit seine eigene GPS-Position einspeichert.

Damit kennt jeder Datenlogger seine eigene GPS-Position und bei einer Auslesefahrt, bei der die ausgesetzten Datenlogger anhand der im Auslesegerät gespeicherten GPS-Positionen aufgespürt werden, kann auch ein vereinfachtes Auslesegerät ohne angeschlossenes GPS-Modul verwendet werden. Beim Auslesen eines aufgespürten Datenloggers teilt dieser dem vereinfachten Auslesegerät zusammen mit den sonstigen Daten auch seine eingespeicherte GPS-Position mit.

### Zeichnungslegende

- 1: Rohrleitung
- 2: Absperrschieber
- 3: Absperrschieber
- 4: Absperrschieber
- 5: Datenlogger
- 6: Datenlogger
- 7: Datenlogger
- 8: Funkübertragungsstrecke
- 9: Fahrzeug
- 10: Auslesegerät
- 11: GPS-Modul
- 12: GPS-Satellit
- 13: Position
- 14: Position
- 15: Position

- 16: Fahrstrecke
- 17: Datenspeicher
- 18: GPS-Koordinate
- 19: Messdaten
- 20: Bildschirmanzeige
- 21: ID-Nr.
- 22: Logger-Nr.
- 23: GPS-Position
- 24: Position des Loggers
- 25: Position des Nutzers
- 26: Zielentfernung
- 27: Kurs
- 28: Geschwindigkeit
- 29: Richtungspfeil
- 30: Umgebungskarte

## Patentansprüche

1. Verfahren zum Aussetzen und Wiederauffinden von Datenloggern (5-7), die in einem ersten Schritt auf voneinander beabstandeten Positionen (13-15) eines Versorgungsnetzes mit einer Vielzahl von verzweigten Rohrleitungen (1), z.B. für Trinkwasser, ausgesetzt werden, die in einem zweiten Schritt mindestens die Fliessgeräusche des strömenden Mediums an der ausgesetzten Position (13-15) aufzeichnen und die in einem dritten Schritt von einem vorbei fahrenden Fahrzeug (9) mit einem dort angeordneten Auslesegerät (10) ausgelesen werden, **dadurch gekennzeichnet, dass** dem Auslesegerät ein GPS-Modul (11) zugeordnet ist und dass beim Aussetzen des Datenloggers (5-7) an der ihm zugeordneten Position (13-15) auf der Rohrleitung (1) die aktuelle GPS-Position (23) des Datenloggers (5-7) an dieser Position (13-15) im Auslesegerät (10) abgespeichert wird.

2. Verfahren nach Anspruch 1, **dadurch gekennzeichnet, dass** die GPS-Positionen (23) der Datenlogger (5-6) beim Aussetzen auf der Versorgungsleitung im Auslesegerät gespeichert werden.

3. Verfahren nach Anspruch 1 oder 2, **dadurch gekennzeichnet, dass** das Auslesegerät (10) als Navigationshilfe beim Wiederauffinden der ausgesetzten Datenlogger (5-7) verwendet wird.

4. Verfahren nach einem der Ansprüche 1 bis 3, **dadurch gekennzeichnet, dass** die im Auslesegerät (10) gespeicherten GPS-Positionen der ausgesetzten Datenlogger (5-7) auf einer geografischen Karte dargestellt werden.

5. Verfahren nach einem der Ansprüche 1 bis 4, **gekennzeichnet durch** die folgenden Schritte:
1. Datenlogger an der Messstelle platzieren
2. GPS-Position zu dem Datenlogger speichern
3. Datenlogger zeichnet Messdaten auf
4. Navigieren zu der Messstelle mit dem Datenlogger
5. Auslesen der Messdaten

6. Vorrichtung zum Aussetzen und Wiederauffinden von Datenloggern (5-7), die auf voneinander beabstandeten Positionen (13-15) eines Versorgungsnetzes mit einer Vielzahl von verzweigten Rohrleitungen (1), z.B. für Trinkwasser, ausgesetzt sind, und mindestens die Fliessgeräusche des strömenden Mediums an der ausgesetzten Position (13-15) aufzeichnen und von einem vorbei fahrenden Fahrzeug (9) mit einem dort angeordneten Auslesegerät (10) ausgelesen werden, **dadurch gekennzeichnet, dass** dem Auslesegerät (10) ein GPS-Modul (11) zugeordnet ist, welches mindestens die aktuelle GPS-Position (23) des ausgesetzten Datenloggers (5-7) speichert.

7. Vorrichtung nach Anspruch 6 zur Ausführung des Verfahrens nach einem oder mehreren der Ansprüche 1 bis 5, **dadurch gekennzeichnet, dass** dem Auslesegerät (10) mindestens eine Bildschirmanzeige (20) zugeordnet ist, in welcher mindestens die gespeicherte GPS-Position (23) des ausgesetzten Datenloggers (5-7) und die aktuelle GPS-Position (23) des Auslesegerätes (10) darstellbar sind.

8. Vorrichtung nach Anspruch 7, **dadurch gekennzeichnet, dass** aus den beiden GPS-Positionen von Datenlogger (5-7) und Auslesegerät (10) die Richtung der Bewegung des Auslesegerätes (10) optisch darstellbar ist.

9. Vorrichtung nach einem oder mehreren der Ansprüche 1 bis 8, **dadurch gekennzeichnet, dass** im Auslesegerät ein Alarmsignal generierbar ist, für den Fall das an einer gespeicherten GPS-Position (23) eines Datenloggers (5-7) kein Funksignal empfangbar ist.

10. Vorrichtung nach einem oder mehreren der Ansprüche 1 bis 9, **dadurch gekennzeichnet, dass** die im Auslesegerät (10) gespeicherten GPS-Daten konvertierbar sind und auf ein herkömmliches Kraftfahrzeug-Navigationssystem portierbar sind.
Vorrichtung nach einem der Ansprüche 1 bis 10, **dadurch gekennzeichnet, dass** das Auslesegerät (10) dem jeweiligen Datenlogger (5-7) die vom Auslesegerät ermittelte GPS-Position dem Datenlogger (5-7) über eine Funkschnittstelle übermittelt, der die GPS-Position zusammen mit weiteren Daten speichert und bei Bedarf an das Auslesegerät (10) funkgestützt übermittelt.
